# EUROPÄISCHE PATENTANMELDUNG

(11) **EP 2 458 296 A1**
(43) Veröffentlichungstag der Anmeldung: **30.05.2012**
(21) Anmeldenummer: 11150855.2
(22) Anmeldetag: 13.01.2011
(51) Int. Cl.: F24F 13/02, B32B 17/00, F16L 9/17

(54) **Faltbarer Luftkanal**

(30) Priorität: 30.11.2010 EP 10193151
(71) Anmelder: Centrotherm Systemtechnik GmbH, 59929 Brilon (DE)
(72) Erfinder: Liese, Ralf, 59909, Bestwig- OT Ostwig (DE)
(74) Vertreter: Zenz

(57) **Zusammenfassung**

Bei einem Leitungsbauteil, das vor Herstellung einer in sich geschlossenen Mantelfläche plattenförmig ausgebildet ist und eine Schicht (2) aus einem verdichteten und wärmeisolierenden Fasermaterial aufweist, wobei auf der Innenseite (3) der Schicht (2) aus Fasermaterial eine fluidundurchlässige Dichtschicht (4) aufgebracht ist, wobei eine Vielzahl von eine Biegung des Leitungsbauteils (1, 1') ermöglichenden Längsauskehlungen (7) in der Schicht (2) aus Fasermaterial ausgeformt ist, wobei die Längsauskehlungen (7) das Leitungsbauteil (1, 1') in Seitenwandabschnitte (8, 8') unterteilen und jeweilige Eckenabschnitte (9) definieren, und wobei zur Herstellung einer in sich geschlossenen Mantelfläche das Leitungsbauteil (1, 1') mit seinen Längskanten (17, 18) aneinanderstoßend zu einem gewünschten polygonalen Mantelquerschnitt gebogen ist und die in sich geschlossene Mantelfläche einen durch Zusammenfügen der Längskanten (17, 18) gebildeten Längsfügeabschnitt (21) aufweist, soll eine Lösung geschaffen werden, durch die die auf konstruktiv einfache Weise und kostengünstig ein verbessertes und insbesondere ein selbsttragendes Leitungsbauteil bereitgestellt wird. Dies wird dadurch erreicht, dass bei in sich geschlossener Mantelfläche die Längskanten (17, 18) Teil eines Seitenwandabschnitts (8, 8') sind und der Längsfügeabschnitt (21) zwischen zwei Eckenabschnitten (9) im Bereich des entsprechenden Seitenwandabschnitts (8, 8') gebildet ist.

## Beschreibung

Die Erfindung richtet sich auf ein Leitungsbauteil, das vor Herstellung einer in sich geschlossenen Mantelfläche plattenförmig ausgebildet ist und eine Schicht aus einem verdichteten und wärmeisolierenden Fasermaterial aufweist, wobei auf der Innenseite der Schicht aus Fasermaterial eine fluidundurchlässige Dichtschicht aufgebracht ist, wobei eine Vielzahl von eine Biegung des Leitungsbauteils ermöglichenden Längsauskehlungen in der Schicht aus Fasermaterial ausgeformt ist, wobei die Längsauskehlungen das Leitungsbauteil in Seitenwandabschnitte unterteilen und jeweilige Eckenabschnitte definieren, und wobei zur Herstellung einer in sich geschlossenen Mantelfläche das Leitungsbauteil mit seinen Längskanten aneinanderstoßend zu einem gewünschten polygonalen Mantelquerschnitt gebogen ist und die in sich geschlossene Mantelfläche einen durch Zusammenfügen der Längskanten gebildeten Längsfügeabschnitt aufweist.

Ein Leitungsbauteil der eingangs genannten Art kann beispielsweise als Fluidleitungskanal in Leitungssystemen einer Wärmerückgewinnungs-, Heizungs-, Lüftungs- oder Klimaanlage eingesetzt werden und ist zum Beispiel in der WO 2009/145698 A1 beschrieben. Das plattenförmig ausgebildete Leitungsbauteil umfasst eine Schicht aus einem Fasermaterial und wenigstens eine fluidundurchlässige Schicht. Zur Herstellung eines errichteten Fluidleitungskanals mit einer in sich geschlossenen Mantelfläche wird das Leitungsbauteil gebogen und an seinen Längskanten zusammengefügt, wobei die Fügestelle einen Eckenabschnitt bildet. Zum Biegen des Leitungsbauteils sind in dem Fasermaterial Biegelinien vorgesehen. Die Biegelinien definieren die weiteren Eckenabschnitte des Leitungsbauteils und unterteilen das Leitungsbauteil in Seitenwandabschnitte. Darüber hinaus ermöglichen die Biegelinien ein Zusammenlegen des Leitungsbauteils zu dessen Transport. Die Biegelinien sind in das Fasermaterial des Leitungsbauteils durch unterschiedlich starke Verpressung des Fasermaterials in dieses eingeprägt. Dabei müssen gemäß der Lehre der WO 2009/145698 A1 die Fasern im Bereich der Biegelinien entweder nachbehandelt oder gebrochen werden, um überhaupt eine Biegung des Leitungsbauteils in den Eckenabschnitten zu ermöglichen. Nachteilig hierbei ist, dass aufgrund der starken Verpressung bzw. Verdichtung und infolge des Brechens der Fasern im Bereich der Eckenabschnitte die Festigkeit und Dehnfähigkeit der Schicht aus Fasermaterial abnimmt. Insbesondere das Brechen der Fasern führt im Bereich der Eckenabschnitte zu einer ungleichmäßigen Wärmeleitung, wodurch Kältebrücken entstehen. Darüber hinaus ist aber auch keine weitere Materialverdrängung möglich, ohne die Fasern weiter zu brechen. Beim Zusammenlegen des Leitungsbauteils entstehen ferner in den Eckenabschnitten hohe Zugspannungen, die zu einer weiteren Verdichtung des Fasermaterials führen. Aufgrund der in diesem Bereich kurzfaserig gebrochenen Fasern liefern die Eckenabschnitte keinen Beitrag mehr zur mechanischen Stabilität des errichteten Fluidleitungskanals, so dass insgesamt die Stabilität eines von dem Leitungsbauteil gebildeten Fluidleitungskanals abnimmt. Infolge dieser mechanischen Instabilität kann der von dem Leitungsbauteil gebildete Fluidleitungskanal bereits bei geringen Unterdrücken in sich zusammenfallen bzw. kollabieren, was insbesondere daran liegt, dass die Eckenabschnitte nicht zur Formstabilität des Fluidleitungskanals beitragen. Ein weiterer Nachteil bei diesem Leitungsbauteil ist, dass die Fügestelle der beiden Längskanten bzw. die beiden Längskanten des Leitungsbauteils einen Eckenabschnitt bilden. Dadurch liegt eine Asymmetrie der Eckenabschnitte vor, so dass zur Herstellung und Aufrechterhaltung des gewünschten Querschnittsprofils das Leitungsbauteil im errichteten Zustand entlang seiner Längsachse in relativ kurzen Längsabständen umfangsmäßig eingespannt und gestützt werden muss, damit das Leitungsbauteil die gewünschte symmetrische Querschnittsform aufweist. Infolge des Einspannens wird das Leitungsbauteil in eine Querschnittsform gezwängt, so dass in den Eckenabschnitten keine Momenten-Gleichheit mehr herrscht. Diese dadurch hervorgerufenen inneren Spannungen des errichteten Leitungsbauteils führen schon bei geringen Unterdrücken zu einem Kollabieren des von dem Leitungsbauteil gebildeten Kanals. Somit bilden die an der Fügestelle mittels innenseitiger und/oder außenseitiger Verklebung miteinander verbundenen Längskanten des Leitungsbauteils einen mechanisch instabilen Eckenabschnitt.

Der Erfindung liegt die Aufgabe zugrunde eine Lösung zu schaffen, die auf konstruktiv einfache Weise und kostengünstig ein verbessertes und insbesondere ein selbsttragendes Leitungsbauteil bereitstellt, und die darüber hinaus die bei dem bekannten Stand der Technik vorhandenen Probleme löst.

Bei einem Leitungsbauteil der eingangs bezeichneten Art wird diese Aufgabe erfindungsgemäß dadurch gelöst, dass bei in sich geschlossener Mantelfläche die Längskanten Teil eines Seitenwandabschnitts sind und der Längsfügeabschnitt zwischen zwei Eckenabschnitten im Bereich des entsprechenden Seitenwandabschnitts gebildet ist.

Durch die Erfindung wird eine Möglichkeit bereitgestellt, mit welcher auf konstruktiv einfache Weise ein verbessertes Leitungsbauteil für ein Leitungssystem, wie beispielsweise einer Wärmerückgewinnungs-, Heizungs-, Lüftungs- oder Klimaanlage, zur Verfügung steht. Dabei ist es vorteilhaft, wenn das Fasermaterial des Leitungsbauteils aus einer gepressten Mineralwolle, vorzugsweise Glaswolle oder Steinwolle, gebildet ist. Ein aus einem solchen Material gebildetes Leitungsbauteil ist bis über 100°C temperaturbeständig und demnach im Wesentlichen feuerbeständig. Als alternatives Material zu anorganischer Mineralwolle kann auch ein flammhemmend, schwer entflammbar oder nicht brennbares organisches Fasermaterial für die Schicht des Fasermaterials des Leitungsbauteils verwendet werden. Durch die in der Schicht aus gepresstem bzw. verpresstem Fasermaterial gebildeten Hohlräume weist das Leitungsbauteil zudem ein besonders gutes Wärmedämmvermögen auf. Dadurch kommen die vorteilhaften Eigenschaften dieses Materials für die Anwendung als Fluidleitungskanäle wie beispielsweise zur Gebäudebelüftung und -klimatisierung voll zur Geltung. Durch die gute Wärmedämmung wird die temperierte Luft in dem Leitungssystem weder in unerwünschter Weise erwärmt noch abgekühlt. Darüber hinaus gewährleistet das aus Mineralwolle oder organischem Fasermaterial bestehende Leitungsbauteil, dass das Leitungssystem insgesamt den Brandschutzbestimmungen genügt. Ein weiterer Vorteil dieses Materials ist, dass es gute schalldämmende Eigenschaften aufweist, so dass keine weiteren Maßnahmen zur Schalldämmung bei der Installation in Gebäuden erforderlich sind. Aufgrund dessen, dass der Längsfügeabschnitt erfindungsgemäß keinen Eckenabschnitt bildet, sondern Teil eines Seitenwandabschnitts ist und zwischen zwei Eckenabschnitten im Bereich des entsprechenden Seitenwandabschnitts angeordnet ist, sind sämtliche Eckenabschnitte symmetrisch ausgebildet, wodurch ferner Momenten-Gleichheit an den Eckenabschnitten herrscht, die einem Kollabieren infolge von Unterdrücken im Kanalinneren des errichteten bzw. des eine in sich geschlossene Mantelfläche aufweisenden Leitungsbauteils entgegenwirkt. Die Verlagerung der Fügestelle aus einem Eckenabschnitt in einen eckenfernen Bereich eines Seitenwandabschnitts trägt somit zur mechanischen Stabilisierung der Querschnittsform des von dem Leitungsbauteil gebildeten Kanals bei. Die beim Stand der Technik für eine mechanische Instabilität verantwortliche Wechselwirkung zwischen Eckenabschnitt und Längsfügeabschnitt ist durch die Erfindung eliminiert.

In Ausgestaltung der Erfindung ist vorgesehen, dass die Längskanten des Leitungsbauteils jeweils einen stufenförmig ausgebildeten Absatz aufweisen, wobei die jeweiligen stufenförmig ausgebildeten Absätze komplementär zueinander ausgebildet sind. Dadurch ist es möglich, dass der Längsfügeabschnitt nicht als Stoß ausgebildet ist, sondern dass die beiden Längskanten des Leitungsbauteils zur Ausbildung des Längsfügeabschnitts sich überlappen bzw. überdecken, was die Stabilität der Fügestelle erhöht.

Zur Erhöhung der Stabilität des Längsfügeabschnitts sieht die Erfindung in Ausgestaltung weiter vor, dass die stufenförmig ausgebildeten Absätze der Längskanten jeweils eine Verbindungsfläche aufweisen, wobei die beiden Verbindungsflächen eben und glattwandig ausgebildet sind oder wobei eine der beiden Verbindungsflächen eine komplementär zu der entsprechend anderen Verbindungsfläche ausgebildete Oberflächenprofilierung aufweist. Bei in sich geschlossener Mantelfläche des Leitungsbauteils liegen die beiden Verbindungsflächen aufeinander auf, so dass die Längskanten sich überlappen bzw. überdecken. Durch die optionale komplementäre Ausgestaltung der Oberflächenprofilierung der jeweiligen Verbindungsflächen wird ferner die Fügefläche erhöht, die nach Biegung des Leitungsbauteils zur Bildung der in sich geschlossenen Mantelfläche miteinander verklebt werden können.

Bei einer Oberflächenprofilierung der Verbindungsflächen ist es von besonderem Vorteil, wenn die jeweilige Oberflächenprofilierung einer entsprechenden Verbindungsfläche ein im Querschnitt rippen- oder sägezahnförmiges Muster aufweist. Ein solches, in der Ebene der Fügestelle verdecktes Muster trägt zur Erhöhung der Steifigkeit der Fügestelle bei.

Gemäß einer vorteilhaften Ausgestaltung ist erfindungsgemäß vorgesehen, dass die Längsauskehlungen auf der Innenseite der Schicht aus Fasermaterial ausgebildet sind und dass die Schicht aus Fasermaterial auf ihrer Außenseite zu den jeweiligen Längsauskehlungen korrespondierend angeordnete und nach außen ballig ausgebildete Längswölbungen aufweist, die Teil der jeweiligen Eckenabschnitte sind. Aufgrund der balligen Ausgestaltung der Eckenabschnitte weist die Schicht aus Fasermaterial in diesen Bereichen im Vergleich zu den Seitenwandabschnitten eine geringere Verdichtung auf und ist dadurch im Wesentlichen elastisch ausgebildet. Diese elastische Ausgestaltung der Eckenabschnitte bewirkt, dass sowohl beim Zusammenlegen des Leitungsbauteils als auch zur Herstellung eines Fluidleitungskanals mit einer in sich geschlossenen Mantelfläche die Fasern in den Eckenabschnitten nicht gebrochen, sondern lediglich gedehnt werden, so dass das Fasermaterial beim Zusammenlegen des Leitungsbauteils zu dessen Transport nicht beschädigt wird. Ferner liegen nach Herstellung des Fluidleitungskanals, was durch Biegung des Leitungsbauteils erfolgt, Abschnitte der Innenwand der innenseitig ausgebildeten Längsauskehlungen aneinander an, was wesentlich zur Erhöhung der mechanischen Stabilität des Fluidleitungskanals beiträgt.

In Ausgestaltung der Erfindung ist ferner vorgesehen, dass die Breite einer jeweiligen Längsauskehlung kleiner ist als die Breite einer jeweiligen nach außen ballig ausgebildeten Längswölbung. Somit nehmen die Eckenabschnitte eine Art mondsichelförmige Ausgestaltung an, was einen sehr weichen und gering verdichteten bzw. verpressten Verlauf des Fasermaterials in den Eckenabschnitten ermöglicht. Dadurch sind starke Verformungen der Eckenabschnitte, beispielsweise bei Biegung des Leitungsbauteils, ohne eine Schädigung des Fasermaterials möglich.

Zusätzlich ist es im Hinblick auf eine faserschonende Biegung der Eckenabschnitte auch von Vorteil, wenn die Fasern der Schicht aus Fasermaterial in den Eckenabschnitten gleich stark oder geringer stark verdichtet bzw. verpresst sind als in den Seitenwandabschnitten.

Um die selbsttragenden Eigenschaften des Leitungsbauteils weiter zu erhöhen, ist in weiterer Ausgestaltung der Erfindung vorgesehen, dass zumindest Bereiche der Seitenwandabschnitte durch starke Verdichtung bzw. Verpressung der Fasern der Schicht aus Fasermaterial formstabil ausgebildet sind.

Die Form der Längswölbungen und Längsauskehlungen ist beliebig, wobei es sich als vorteilhaft erwiesen hat, wenn die Längsauskehlungen und die Längswölbungen jeweils im Querschnitt ellipsenförmig oder kreisbogenförmig ausgebildet sind. Die Querschnitte der Längswölbungen und der Längsauskehlungen können hierbei in ihrer Grundform identisch oder voneinander abweichend sein.

Um die elastischen Eigenschaften der Eckenabschnitte zu gewährleisten und eine Verdichtung des Fasermaterials bei Biegung zu vermeiden ist es dann von Vorteil, wenn der Radius einer im Querschnitt ellipsenförmig oder kreisbogenförmig ausgebildeten Längswölbung größer ist als der Radius einer im Querschnitt ellipsenförmig oder kreisbogenförmig ausgebildeten Längsauskehlung. Auch ist es in diesem Zusammenhang vorteilhaft, wenn der Radius einer im Querschnitt ellipsenförmig oder kreisbogenförmig ausgebildeten Längswölbung größer ist als die Breite eines Seitenwandabschnitts.

Die Erfindung sieht in weiterer Ausgestaltung vor, dass eine elastische Materialschicht an der Außenseite des plattenförmig ausgebildeten Leitungsbauteils vorgesehen ist und auf der Schicht aus Fasermaterial aufgebracht ist. Die außenseitig angebrachte Materialschicht ermöglicht je nach Dehnfähigkeit eine Rückstellung bzw. Formstabilität des in Form eines im Querschnitt polygonalen Fluidleitungskanals gebogenen Leistungsbauteils. Ferner kann die außenseitig angebrachte Materialschicht optional eine wasserdampfdiffusionsdichte Folienschicht, beispielsweise aus einem thermoplastischen oder elastomeren Kunststoff, aufweisen, wobei ferner die Materialschicht bzw. die Folienschicht mit Hilfe von beispielsweise Glas-, Keramik- oder Kunststofffasern verstärkt sein kann. Denkbar ist es somit, dass die elastische Materialschicht aus einem organischen oder anorganischen Material bestehen kann, wobei auch eine Kombination aus beidem, beispielsweise in Ausprägung eines Vlies mit oder ohne thermoplastischer oder elastomerer Barrierefolie, vorstellbar ist.

In Ausgestaltung der Erfindung ist dann ferner vorgesehen, dass im abgewickelten Zustand des Leitungsbauteils, d.h. in einem plattenförmigen Zustand, bevor das Leitungsbauteil zur Bildung einer in sich geschlossenen Mantelfläche gebogen wird, die innenseitige Dichtschicht die Längsauskehlungen derart überdeckt, dass zwischen der Dichtschicht und den jeweiligen Längsauskehlungen jeweilige längsverlaufende Hohlräume gebildet sind. Diese Hohlräume bilden Aufnahmeräume, von denen Material des Leitungsbauteils bei Biegung aufgenommen werden kann. Alternativ ist es denkbar, dass die innenseitige Dichtschicht sich der Querschnittsform bzw. dem Verlauf der Längsauskehlungen anpasst und an der Innenwand der Längsauskehlungen anliegt, d.h. dass in den Längsauskehlungen kein geschlossener Hohlraum durch die Dichtschicht ausgebildet wird.

Um in strömungstechnischer Hinsicht Verluste oder Verwirbelungen der Strömung in den Randzonen des von dem Leitungsbauteil gebildeten Fluidleitungskanals möglichst gering zu halten oder sogar zu vermeiden, ist in weiterer Ausgestaltung der Erfindung vorgesehen, dass bei geschlossener Mantelfläche die Innenwand einer jeweiligen Längsauskehlung flächig an sich selbst anliegt und der die jeweilige Längsauskehlung überdeckende Abschnitt der fluidundurchlässigen Dichtschicht zwischen der an sich selbst anliegenden Innenwand angeordnet und eingeklemmt ist. Auf diese Weise wird eine definierte Innenkante des gebildeten Fluidleitungskanals bei geschlossener Mantelfläche erzielt. Darüber hinaus wird vermieden, dass das bei Biegung des Leitungsbauteils überschüssige Material der fluidundurchlässigen Schicht, was zusätzlich zu Strömungsverlusten beitragen könnte, innen im hergestellten Fluidleitungskanal angeordnet ist.

Um ferner ein Aufrollen des Leitungsbauteils in dessen Längsrichtung zu gewährleisten, ist es schließlich von Vorteil, wenn zumindest ein Seitenwandabschnitt der Schicht aus Fasermaterial außenseitig quer verlaufende, ballig ausgebildete und nach außen gewölbte Biegeabschnitte mit geringer Materialverdichtung aufweisen. Die ballig ausgebildeten Biegeabschnitte ähneln hierbei vom Prinzip und in ihrer Funktion her den ballig ausgebildeten Eckenabschnitten, wobei zweckmäßigerweise alle Seitenwandabschnitte ballig ausgebildete Biegeabschnitte aufweisen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte Ausführungsbeispiele der Erfindung dargestellt sind. In der Zeichnung zeigt:
Figur 1 ein erfindungsgemäßes Leitungsbauteil vor Herstellung einer in sich geschlossener Mantelfläche in perspektivischer Ansicht,
Figur 2 das Leitungsbauteil nach Herstellung einer in sich geschlossenen Mantelfläche,
Figur 3 das Leitungsbauteil aus Figur 1 in einer Querschnittsansicht,
Figur 4 einen in Figur 3 gezeigten Ausschnitt B des Leitungsbauteils,
Figur 5 den in Figur 4 gezeigten Ausschnitt des Leitungsbauteils in einem ersten Schritt zur Herstellung einer in sich geschlossenen Mantelfläche,
Figur 6 den in Figur 4 gezeigten Ausschnitt des Leitungsbauteils in einem zweiten Schritt zur Herstellung einer in sich geschlossenen Mantelfläche,
Figur 7 den in Figur 4 gezeigten Ausschnitt des Leitungsbauteils nach Herstellung einer in sich geschlossenen Mantelfläche,
Figur 8 das Leitungsbauteil im zusammengelegten Zustand in perspektivischer Ansicht,
Figur 9 eine einen Längsfügungsabschnitt bildende Verbindungsfläche des Leitungsbauteils,
Figur 10 eine komplementär zu der in Figur 9 dargestellten Verbindungsfläche ausgebildete Verbindungsfläche des Leitungsbauteils,
Figur 11 ein Leitungsbauteil gemäß einer alternativen Ausgestaltung vor Herstellung einer in sich geschlossenen Mantelfläche,
Figur 12 eine vergrößerte Ansicht einer Verbindungsfläche des in Figur 11 dargestellten Leitungsbauteils,
Figur 13 das in Figur 11 dargestellte Leitungsbauteil kurz vor Herstellung einer in sich geschlossenen Mantelfläche,
Figur 14 das in Figur 11 dargestellte Leitungsbauteil mit geschlossener Mantelfläche und im zusammengelegten Zustand, und
Figur 15 einen vergrößerten Ausschnitt eines Seitenwandabschnitts des in Figur 11 dargestellten Leitungsbauteils.

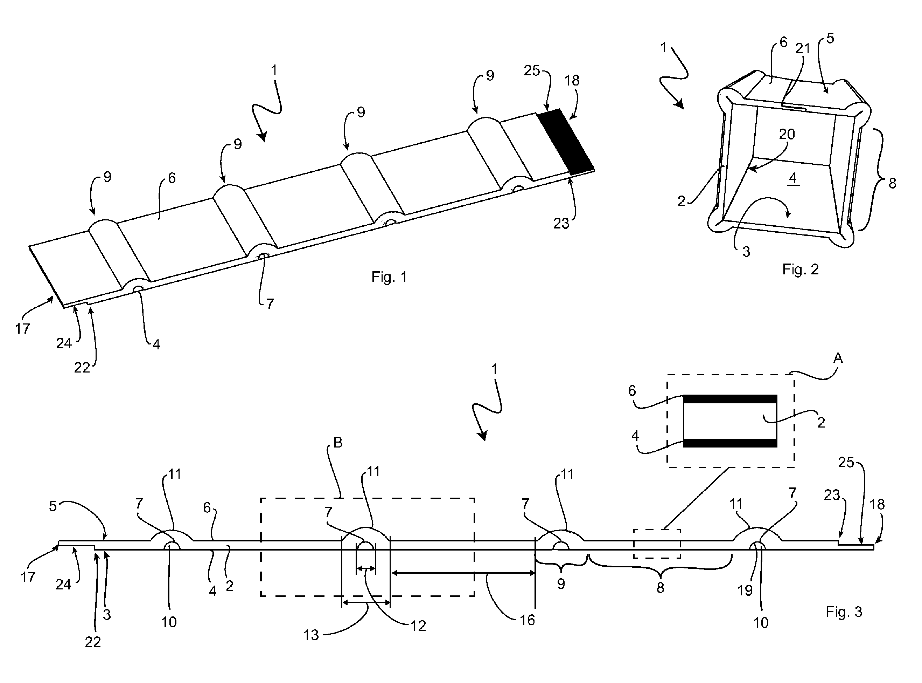

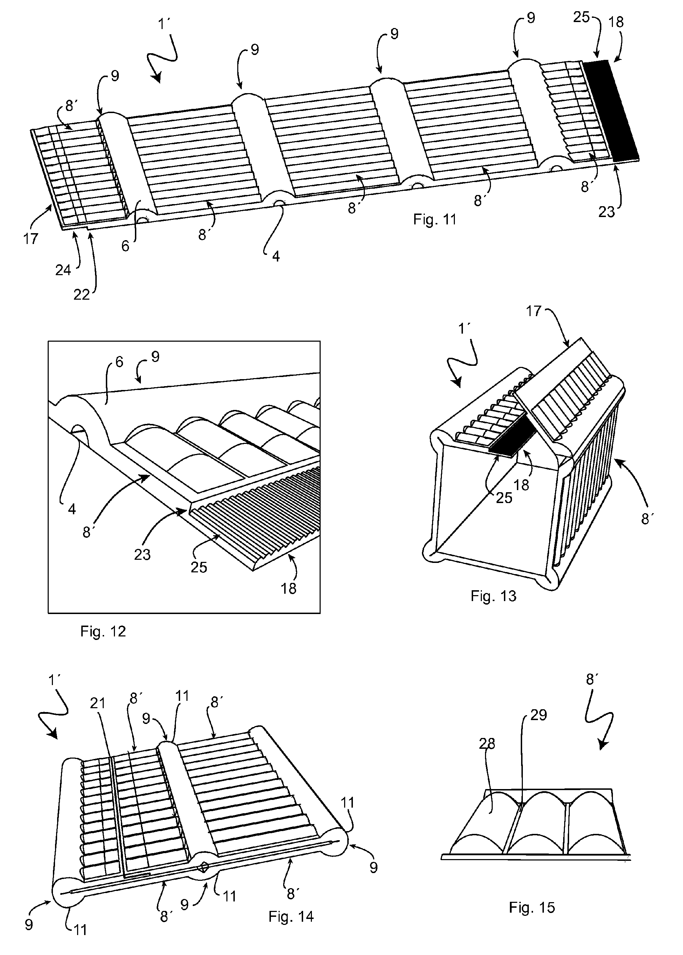

Nachstehend wird das erfindungsgemäße Leitungsbauteil 1 mit Bezug auf die Figuren beschrieben, wobei in den Figuren 1 bis 10 ein Leitungsbauteil 1 gemäß eines ersten Ausführungsbeispiels und in den Figuren 11 bis 15 ein Leitungsbauteil 1' gemäß einer zweiten Ausführungsform dargestellt ist.

Das in Figur 1 dargestellte Leitungsbauteil 1 dient als Fluidleitungskanal. Der Ausdruck "Fluid" bezieht sich hierbei sowohl auf ein gasförmiges als auch auf ein dampfförmiges Medium, welches durch den Fluidleitungskanal bzw. durch das Leitungsbauteil 1 geleitet werden soll. Das Leitungsbauteil 1 weist vor der Herstellung einer geschlossenen Mantelfläche die Form einer länglichen Platte auf, die in einer Querschnittsansicht in Figur 3 dargestellt ist. Nach Herstellung einer in sich geschlossenen Mantelfläche weist das Leitungsbauteil 1 eine im Querschnitt polygonale Form auf, die in dem gezeigten Ausführungsbeispiel einer viereckigen Gestalt entspricht, wie aus Figur 2 ersichtlich ist. Es sei angemerkt, dass das in den Figuren 1 bis 3 dargestellte Leitungsbauteil 1 lediglich exemplarisch einen kurzen Längsabschnitt zeigt, denn das Leitungsbauteil 1 weist üblicherweise eine Länge von etwa drei oder mehr Metern auf.

Das plattenförmig ausgebildete Leitungsbauteil 1 ist schichtartig aufgebaut, wie dem vergrößerten Ausschnitt A in Figur 3 zu entnehmen ist, und umfasst eine mittlere Schicht 2 aus einem Fasermaterial. Die Schicht 2 aus Fasermaterial bzw. die Fasermaterialschicht 2 ist aus verdichteter Mineralwolle, wie beispielsweise Glaswolle oder Steinwolle, gebildet und weist wärmeisolierende sowie optional flammhemmende, schwer entflammbare oder nicht brennbare Eigenschaften auf. Alternativ zu anorganischer Mineralwolle kann auch ein organisches Fasermaterial oder organisches Halbzeug für die Schicht 2 verwendet werden. Für die Erfindung wird ausgenutzt, dass aus diesem im Rohzustand mechanisch instabilen Fasermaterial durch Verpressen im Wesentlichen formstabile, eigensteife Formteile erzeugt werden können. Auf der die Innenseite 3 des Leitungsbauteils 1 darstellenden Seitenfläche ist auf der Schicht 2 aus Fasermaterial eine fluidundurchlässige Dichtschicht 4 aufgebracht, die aus einem thermoplastischen Kunststoff, wie beispielsweise PET, bestehen kann.

Auf der die Außenseite 5 des Leitungsteils 1 darstellenden Seitenfläche ist auf der Schicht 2 aus Fasermaterial eine Materialschicht bzw. Außenschicht 6 aus einem Vliesmaterial aufgebracht, wie insbesondere der Figur 3 zu entnehmen ist. Die Materialschicht 6 aus Vliesmaterial ist rein optional und somit entbehrlich. Allerdings kann das Vorsehen dieser Materialschicht 6 je nach Dehnfähigkeit des Vliesmaterials gewisse Vorteile hinsichtlich einer Rückstellwirkung und Stabilität des in Form eines polygonalen Fluidleitungskanals gebogenen Leistungsbauteils 1 mit sich bringen. Alternativ kann die Materialschicht 6 aus einem wasserdampfdiffusionsdichten Material gebildet sein.

Zur Herstellung einer in sich geschlossenen Mantelfläche ist es erforderlich, dass sich das nicht-metallische Leitungsbauteil 1 leicht biegen lässt. Zu diesem Zweck weist die Schicht 2 aus Fasermaterial mehrere voneinander beabstandete Längsauskehlungen 7 auf, die eine Biegung des Leitungsbauteils 1 ermöglichen und die das Leitungsbauteil 1 bzw. die Schicht 2 aus Fasermaterial in mehrere Seitenwandabschnitte 8 unterteilen. Dabei gehören die Längsauskehlungen 7 zu einzelnen Eckenabschnitten 9 des Leitungsbauteils 1 und sind innenseitig bzw. in der Innenseite 3 ausgeformt. Wie aus den Figuren 1 und 3 ersichtlich ist, überdeckt die innenseitig angeordnete Dichtschicht 4 die in der Schicht 2 aus Fasermaterial ausgebildeten Längsauskehlungen 7, so dass zwischen der Dichtschicht 4 und einer jeweiligen Längsauskehlung 7 ein längs verlaufender Hohlraum 10 ausgebildet ist. Alternativ kann sich die Dichtschicht 4 an die Form der jeweiligen Längsauskehlungen 7 im Wesentlichen anpassen und an diese anschmiegen.

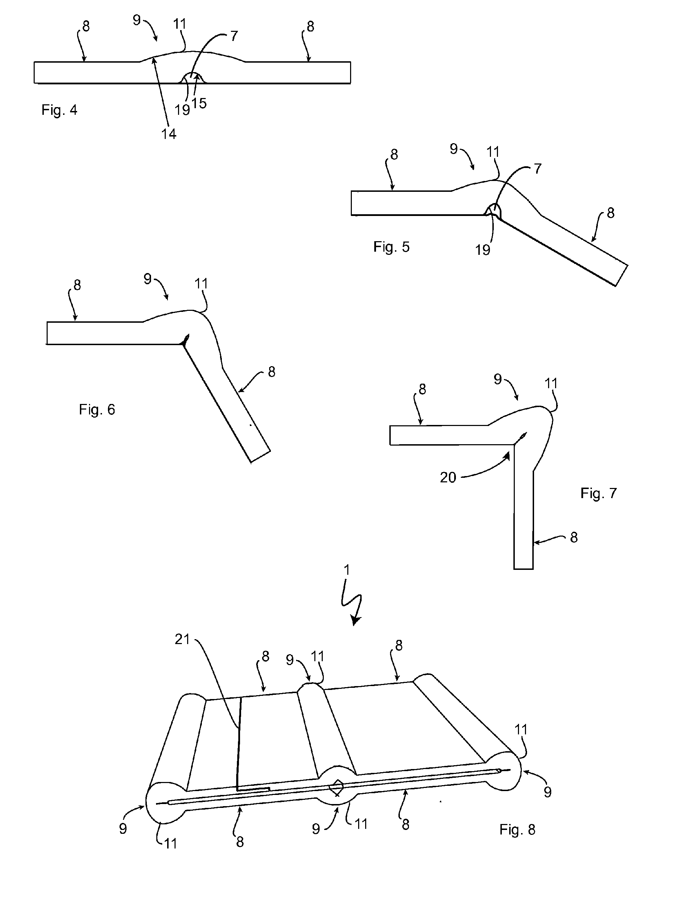

Ein jeweiliger Eckenabschnitt 9 umfasst neben einer Längsauskehlung 7 zusätzlich eine Längswölbung 11, die ballig und auf der Außenseite 5 des Leitungsbauteils 1 bzw. außenseitig in der Schicht 2 aus Fasermaterial ausgebildet ist. Wie insbesondere in der Figur 3 zu erkennen ist, ist vorgesehen, dass die Breite 12 einer jeweiligen Längsauskehlung 7 kleiner ist als die Breite 13 einer jeweiligen Längswölbung 11. In dem dargestellten Ausführungsbeispiel sind ferner die Längsauskehlungen 7 und die Längswölbungen 11 im Wesentlichen kreisbogenförmig ausgebildet, wobei alternativ jede erdenkliche Formgebung möglich ist. Beispielsweise könnten die Längsauskehlungen 7 als V-förmige Ausnehmungen oder ellipsenförmig ausgebildet sein, wohingegen die Längswölbungen 11 ballig gerundet nach außen vorstehen. Es sind somit auch unterschiedliche Formen der Längsauskehlungen 7 und der Längswölbungen 11 möglich, so dass beide keine identische Grundform aufweisen müssen. Neben der Form der Längsauskehlungen 7 und Längswölbungen 11 ist entsprechend der in dem ersten Ausführungsbeispiel dargestellten, im Wesentlichen kreisbogenförmigen Gestalt wesentlich, dass der Radius 14 einer jeweiligen Längswölbung 11 größer ist als der Radius 15 einer jeweiligen Längsauskehlung 7, wie aus Figur 4 hervorgeht. Ferner kann der Radius 14 einer jeweiligen Längswölbung 11 größer als die Breite 16 (siehe Figur 3) eines jeweiligen Seitenwandabschnitts 8 sein. Aufgrund dieser Ausgestaltung der Eckenabschnitte 9 ist der Bereich um eine jeweilige Längsauskehlung 7 mit einer im Vergleich zu den Seitenwandabschnitten 8 dickeren Schicht 2 aus Fasermaterial ausgebildet. Folglich sind die Fasern der Schicht 2 aus Fasermaterial in diesem Bereich bzw. in den Eckenabschnitten 9 gleich stark oder weniger stark verdichtet bzw. verpresst als die Fasern der Schicht 2 aus Fasermaterial in den Seitenwandabschnitten 8, wobei zumindest Bereiche der Seitenwandabschnitte 8 durch starke Verdichtung der Fasern der Schicht 2 aus Fasermaterial formstabil ausgebildet sind. Im Gegensatz zu diesen formstabilen Bereichen sind die Eckenabschnitte 9 im Wesentlichen elastisch ausgebildet, so dass eine Verformung der Eckenabschnitte 9 zu keiner Schädigung der Fasern der Schicht 2 aus Fasermaterial führt und die Fasern bei Verformung eines Eckenabschnitts 9 nicht gebrochen werden.

Sowohl die Längsauskehlungen 7 als auch die korrespondierend gegenüberliegend zu den Längsauskehlungen 7 angeordneten und ausgebildeten Längswölbungen 11 sind in der Schicht 2 aus Fasermaterial ausgeformt, was beispielsweise durch eine entsprechende Formgebung bei Verpressung bzw. Verdichtung der Schicht 2 aus Fasermaterial im Rahmen des Herstellungsprozesses erfolgen kann. Nachdem dann die Schicht 2 aus Fasermaterial mit ihren Längsauskehlungen 7 und Längswölbungen 11 hergestellt ist, wird dann innenseitig die Dichtschicht 4 und gegebenenfalls außenseitig die optionale Materialschicht 6 aus Vliesmaterial an der Schicht 2 aus Fasermaterial angebracht bzw. auf diese aufgebracht. Nach diesen Herstellungsschritten liegt das Leitungsbauteil 1, wie in den Figuren 1 und 3 dargestellt, als plattenförmig ausgebildetes Rohteil vor.

Zur Herstellung einer in sich geschlossenen Mantelfläche und somit zur Bildung eines nicht-metallischen Fluidleitungskanals wird das Leitungsbauteil 1 im Bereich der elastisch ausgebildeten Eckenabschnitte 9 gebogen. Die Figur 4 zeigt exemplarisch einen aus Figur 3 ersichtlichen Ausschnitt B, der einen einzigen Eckenabschnitt 9 und dessen angrenzende Seitenwandabschnitte 8 dargestellt, wohingegen die Figuren 5 bis 7 zeigen einzelne Zustände beim Biegevorgang für den Ausschnitt B zeigen. Das in dem Ausführungsbeispiel dargestellte Leitungsbauteil 1 weist insgesamt vier Längsauskehlungen 7 und vier Längswölbungen 11 auf, die das Leitungsbauteil 1 in vier Seitenwandabschnitte 8 unterteilen. Durch Biegung des Leitungsbauteils 1 in den Eckenabschnitten 9 bzw. durch Verformung der Eckenabschnitte 9 wird die in sich geschlossene Mantelfläche hergestellt, so dass das Leitungsbauteil 1 die Form eines im Querschnitt viereckigen Fluidleitungskanals annimmt. Denkbar sind selbstverständlich Abwandlungen mit weniger oder mehr als vier Eckabschnitten 9, so dass im Rahmen der Erfindung jede im Querschnitt polygonale Gestalt eines Fluidleitungskanals denkbar und herstellbar ist.

Ausgehend von der in Figur 4 dargestellten Form des Eckenabschnitts 9 führt die Biegung bzw. Verformung des Eckenabschnitts 9 dazu, dass einer der beiden dargestellten Seitenwandabschnitte 8 unter einem Winkel von etwa 30° zu dem anderen Seitenwandabschnitt 8 abgewinkelt angeordnet ist. In den Figuren 6 und 7 nimmt die Verformung des Eckenabschnitts 9 bzw. die Biegung der beiden Seitenwandabschnitte 8 zu, wobei der Winkel in Figur 6 in etwa 60° beträgt, unter dem der eine Seitenwandabschnitt 8 zu dem anderen Seitenwandabschnitt 8 abgewinkelt ist. In Figur 7 ist schließlich die Endposition der beiden angrenzenden Seitenwandabschnitte 8 dargestellt. Bei dem im Querschnitt viereckigen Fluidleitungsbauteil sind in Endposition folglich die beiden Seitenwandabschnitte 8 unter einem Winkel von 90° zueinander angeordnet. Dieser Biegevorgang wird für die drei anderen Eckenabschnitte 9 bzw. die daran angrenzenden Seitenwandabschnitte 8 durchgeführt, so dass insgesamt das Leitungsbauteil 1 die in Figur 2 gezeigte, viereckige Gestalt aufweist.

Um die Verluste in den innenseitigen Eckenbereichen des wie vorstehend zu einem Fluidleitungskanal geformten und gebogenen Leitungsbauteils 1 möglichst gering zu halten, sollte kein die Strömung beeinflussendes Material in diesem Bereich vorhanden sein. Normalerweise würde nach Herstellung der in sich geschlossenen Mantelfläche das die Längsauskehlungen 7 überdeckende Material der Dichtschicht 4 überschüssig werden. Dadurch würde ein Teil des Materials der Dichtschicht 4 im Inneren des gebildeten Fluidleitungskanals angeordnet sein und die Strömung nachteilig beeinflussen. Um dies zu vermeiden ist erfindungsgemäß vorgesehen, dass das überschüssige Material der Dichtschicht 4 nicht im Innern des gebildeten und in sich geschlossenen Fluidleitungskanals angeordnet ist, sondern beim Biege- bzw. Verformungsvorgang in die Hohlräume 10 der Längsauskehlungen 7 gelangt, wobei die Dichtschicht 4 die Längsauskehlung 7 überdeckt oder dem Verlauf der Längsauskehlung 7 im Querschnitt folgt. Wie bereits in Figur 5 angedeutet ist, legt sich der die Längsauskehlung 7 überdeckende Teil der Dichtschicht 4 bei Biegung des Eckenabschnitts 9 und der angrenzenden Seitenwandabschnitte 8 in den Hohlraum 10, wobei mit Zunahme der Verformung des Eckenabschnitts 9 die Größe des Hohlraums 10 abnimmt und sich die Querschnittsform der Längsauskehlung 7 von im Wesentlichen kreisförmig zu zunächst elliptisch ändert. Mit weiterer Zunahme der Biegung der Seitenwandabschnitte 8 bzw. mit weiterer Verformung des Eckenabschnitts 9 wird der die Längsauskehlung 7 überdeckende Abschnitt der Dichtschicht 4, der sich in die Längsauskehlung 7 gelegt hat, von den sich gegenüberliegenden Bereichen der Innenwand 19 der Längsauskehlung 7 eingeklemmt, da Bereiche der Innenwand 19 im Wesentlichen flächig an sich selbst anliegen und nur durch die Dichtschicht 4 voneinander getrennt sind, wie in Figur 6 und 7 zu erkennen ist. Wie insbesondere aus Figur 7 hervorgeht, wird von einem Teil der an sich selbst anliegenden Innenwand 19 eine rechtwinklige Innenkante 20 (siehe Figuren 2 und 8) definiert.

Die Besonderheit der ballig ausgebildeten Eckenabschnitte 9 ist darin zu sehen, dass die Kraftübertragung von benachbarten Seitenwandabschnitten 8 innenseitig über die Kontaktflächen der an sich selbst anliegenden Innenwand 19 einer jeweiligen Längsauskehlung 7 und außenseitig über die elastischen Eigenschaften der Materialschicht 6 aus Vliesmaterial erfolgt, wobei demgegenüber bei flachliegendem und nicht gebogenem Leitungsbauteil 1 entsprechend der Darstellung in den Figuren 3 und 4 der Extremwert der Dehnung für die Dichtschicht 4 vorliegt.

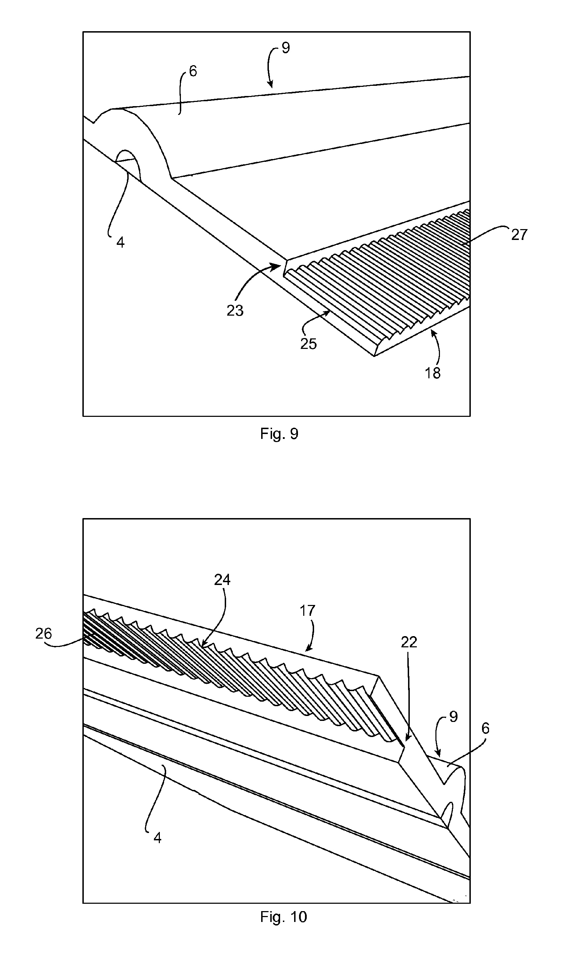

Nach Beendigung des Biegevorgangs an allen vier Eckenabschnitten 9 werden die Längskanten 17 und 18 des Leitungsbauteils 1 zusammengefügt, was beispielsweise durch Anund Einpressen und/oder Kleben der Längskanten 17 und 18 erfolgen kann. Beim Zusammenfügen bilden die Längskanten 17 und 18 einen Längsfügeabschnitt 21 (siehe Figur 2) aus. Erfindungsgemäß sind bei in sich geschlossener Mantelfläche die Längskanten 17, 18 Teil eines Seitenwandabschnitts 8, wobei der Längsfügeabschnitt 21 zwischen zwei Eckenabschnitten 9 im Bereich des entsprechenden Seitenwandabschnitts 8 gebildet ist. Die eckenferne Anordnung des Längsfügeabschnitts 21 erhöht die mechanische Stabilität des errichteten Fluidleitungskanals bzw. des eine geschlossene Mantelfläche aufweisenden Leitungsbauteils 1. Um dies zu realisieren, weist - wie in den Figuren 1, 3, 9 und 10 dargestellt - die Längskante 17 einen stufenförmig ausgebildeten Absatz bzw. Endabschnitt 22 auf, der komplementär bzw. passgenau zu einem stufenförmig ausgebildeten Absatz bzw. Endabschnitt 23 der Längskante 18 geformt ist. Die beiden Endabschnitte bzw. Absätze 22, 23 weisen jeweils eine Verbindungsfläche bzw. Fügefläche 24 und 25 auf. Beim Verbinden der beiden Längskanten 17, 18 werden die Fügeflächen 24 und 25 überlappend übereinander gelegt und beispielsweise mittels einer Klebung miteinander verbunden. Die Verbindungsflächen 24 und 25 können dabei eben bzw. glattwandig ausgeführt sein. Allerdings ist es zur Erhöhung der Stabilität der Fügestelle und zur Vergrößerung der Verbindungsflächen 24 und 25, was zur Steifheit der Verbindung beiträgt, von Vorteil, wenn die Verbindungsflächen 24 und 25 mit einer komplementär bzw. zueinander passgenauen Oberflächenprofilierung ausgestattet sind. Eine beispielhafte Ausgestaltung einer solchen Oberflächenprofilierung ist in den Figuren 9 und 10 dargestellt. Hierbei weist die Verbindungsfläche 24 eine im Querschnitt rippenförmig bzw. gewellt ausgebildete Oberflächenprofilierung 26 auf, die komplementär und passgenau zu einer rippenförmig bzw. gewellt ausgebildeten Oberflächenprofilierung 27 der Verbindungsfläche 25 ausgebildet ist. Alternativ zu einer rippenförmig ausgestalteten Oberflächenprofilierung ist es denkbar, dass die jeweilige Oberflächenprofilierung 26, 27 einer entsprechenden Verbindungsfläche 24, 25 ein im Querschnitt sägezahnförmiges Muster aufweist.

Nachdem das zunächst plattenförmig ausgebildete Leitungsbauteil 1 in eine viereckige Querschnittsform gebogen und die Längskanten zusammengefügt wurden, stellt sich die Frage einer platzsparenden Transportmöglichkeit des errichteten und gefügten Leitungsbauteils 1. In Figur 8 ist eine Möglichkeit zum raumsparenden Transport des erfindungsgemäßen Leitungsbauteils 1 nach Herstellung der in sich geschlossenen Mantelfläche dargestellt. Die Längskanten 17 und 18 werden bereits nach der Herstellung des Leitungsbauteil 1 zusammengefügt, bevor das Leitungsbauteil 1 zu seinem Einbauort transportiert wird. Damit das an seinen Längskanten 17 und 18 zusammengefügte Leitungsbauteil 1 platzsparend transportiert werden kann, werden in dem in der Figur gezeigten Zustand, in welchem das Leitungsbauteil 1 einen viereckigen Querschnitt aufweist, zwei sich gegenüberliegende Eckenabschnitte 9 verformt, wobei die Verformung in umgekehrter Reihenfolge im Vergleich zur Herstellung einer in sich geschlossenen Mantelfläche erfolgt. Bei dieser Verformung werden zwei sich diagonal gegenüberliegende Eckenabschnitte 9 aufeinander zu bewegt, bis die Seitenwandabschnitte 8 aufeinander aufliegen bzw. bis zwei Seitenwandabschnitte 8 auf den zwei anderen Seitenwandabschnitten 8 aufliegen, wie in Figur 8 dargestellt ist. In dieser Transportstellung des Leitungsbauteils 1 weisen die in der Darstellung mittig angeordneten zwei Eckenabschnitte 9 ihre in Figur 4 gezeigte und unverformte Grundform auf, wohingegen die beiden außenliegend angeordneten Eckenabschnitte 9 derart verformt sind, dass die beiden angrenzenden Seitenwandabschnitte 8 über den Eckenabschnitt 9 bogen zueinander in einem Winkel von etwa 180° angeordnet sind. Um das so zusammengelegte Leitungsbauteil 1 in Position zu halten, muss eine Fixierhilfe vorgesehen sein, die die Seitenwandabschnitte 8 aufeinanderliegend zusammengedrückt hält, da die außenliegenden Eckenabschnitte 9 unter Spannung stehen und ohne Fixierhilfe dafür sorgen würden, dass das Leitungsbauteil 1 in seine viereckige Querschnittsform zurückgelangt. Alternativ kann das Leitungsbauteil 1 natürlich auch vor Herstellung einer in sich geschlossenen Mantelfläche auf raumsparende Weise transportiert werden, indem mehrere plattenförmig ausgebildete Leitungsbauteile 1 gemäß dem in den Figuren 1 und 3 dargestellten Zustand platzsparend übereinander gestapelt werden.

In den Figuren 11 bis 15 ist eine zweiten Ausführungsform eines Leitungsbauteils 1' dargestellt. Das Leitungsbauteil 1' unterscheidet sich von dem Leitungsbauteil 1 gemäß der ersten Ausführungsform lediglich durch eine alternative Ausgestaltung der Seitenwandabschnitte. Der schichtartige Aufbau aus einer Schicht 2 aus Fasermaterial, einer Dichtschicht 4 und einer optionalen Materialschicht 6 aus Vliesmaterial und die erfindungsgemäße Ausbildung des Längsfügeabschnitts 21 und der Eckenabschnitte 9 ist unverändert und identisch zu dem in den Figuren 1 bis 10 beschriebenen Leitungsbauteil 1, so dass auf die zu diesen Figuren erfolgte Beschreibung verwiesen wird. Unterschiede bestehen lediglich in der Ausgestaltung der Schicht 2 aus Fasermaterial im Bereich der Seitenwandabschnitte. Während bei dem ersten Ausführungsbeispiel die Seitenwandabschnitte 8 glattwandig bzw. eben ausgebildet sind, weist bei der zweiten Ausführungsform gemäß den Figuren 11 bis 15 die Schicht 2 aus Fasermaterial in den Bereichen der Seitenwandabschnitte 8' mehrere außenseitig querverlaufende, nach außen gewölbte und ballig ausgebildete Biegeabschnitte 28 auf. In den Bereichen der auf den Seitenwandabschnitten 8' ausgebildeten Biegeabschnitte 28 sind die Fasern der Schicht 2 aus Fasermaterial geringer stark verdichtet bzw. verpresst als in den zwischen den Biegeabschnitten 28 ausgebildeten Zwischenabschnitten 29, wobei die Zwischenabschnitte 29 in Bezug auf ihre Wandstärke im Wesentlichen den in den Figuren 1 und 3 gezeigten Seitenwandabschnitten 8 entsprechen. Aufgrund der balligen Ausbildung der Biegeabschnitte 28 weisen diese eine größere Wandstärke, jedoch eine geringere Faserverdichtung auf. Infolge der geringen Materialverdichtung im Bereich der Biegeabschnitte 28 und aufgrund der sich in Längsrichtung des Leitungsbauteils abwechselnden Biegeabschnitte 28 und Zwischenabschnitte 29 (siehe Figur 15) ist es möglich, dass das in den Figuren 11 bis 15 dargestellte Leitungsbauteil 1' zum Transport sowohl auf die in Figur 14 gezeigte Weise raumsparend zusammenlegbar als auch nun zusätzlich in Längsrichtung aufrollbar ist. Aufgrund der geringen Materialverdichtung in den Biegeabschnitten 28 werden die Fasern der Schicht 2 aus Fasermaterial beim Aufrollen nicht geschädigt oder gebrochen, was zu den einleitend beschriebenen Nachteilen hinsichtlich der Stabilität eines Fluidleitungskanals führen würde. Im Bereich des Längsfügeabschnitts 21 sind die Biegeabschnitte 28 und Zwischenabschnitte 29 unterbrochen, wie insbesondere den Figuren 13 und 14 zu entnehmen ist.

Insgesamt zeichnet sich die Erfindung dadurch aus, dass infolge der eckenfernen Anordnung des Längsfügeabschnitts 21 im Bereich eines Seitenwandabschnitts 8 keine Wechselwirkung zwischen den Eckenabschnitten 9 und der Längsfügestelle 21 besteht. Die sich zum Fügen der Längskanten 17, 18 überlappenden Verbindungsflächen 24, 25 können verklebt werden, wobei außenseitig die Fügestelle mittels eines Vliesmaterialstreifens zusätzlich verklebt werden kann. Eine zusätzliche Oberflächenprofilierung 26, 27 der Verbindungsflächen 24, 25 vergrößert die Fügefläche und trägt zusätzlich zur Erhöhung der Steifigkeit des Längsfügeabschnitts 21 bei. Durch die Erfindung wird ein mechanisch stabiles Leitungsbauteil 1, 1' bereitgestellt, dessen Längsfügeabschnitt 21 von dem Eckenabschnitten 9 entkoppelt ist und damit keine mechanische Schwachstelle wie die aus dem Stand der Technik bekannten Lösungen darstellt. Eine Oberflächenprofilierung 26, 27 der Verbindungsflächen 24, 25 erhöht ferner die Aufrollbarkeit des Leitungsbauteils 1, 1'. Zusätzlich zeichnet sich die vorstehend beschriebene Erfindung dadurch aus, dass der Grad der Materialverdichtung in den Eckenabschnitten 9 gleich oder geringer ist als in den Seitenwandabschnitten 8. Dadurch wird eine faserschonende Umlegung der Seitenwandabschnitte 8 ermöglicht, ohne dass dabei eine Schädigung der Fasern der Schicht 2 aus Fasermaterial eintritt. Dies kommt dem Leitungsbauteil 1 insbesondere beim erstmaligen Zusammenlegen zu einem Fluidleitungskanal und später beim Errichten des Fluidleitungskanals zugute, da der Faserverbund der Schicht 2 aus Fasermaterial eine Eigenrückstellung aufweist. Die Längsauskehlungen 7 stellen hierbei ein Verdrängungsvolumen dar, in das überschüssiges Material, beispielsweise Fasermaterial und/oder Material der Dichtschicht, beim Errichten des Kanals ohne Beschädigung ausweichen kann. Über die Materialschicht 6 aus Vliesmaterial wird je nach ihrer Dehnfähigkeit eine Rückstellwirkung bzw. mechanische Formstabilität erzielt.

Erfindungsgemäß ist das vorstehend beschriebene Leitungsbauteil 1 bzw. 1' nach Herstellung einer in sich geschlossenen Mantelfläche in Form eines Kanal- oder Rohrabschnitts ausgebildet, wobei mehrere Leitungsbauteile 1 zum Aufbau von Lüftungsleitungen zusammengefügt werden können. Die Materialbeschaffenheit des Leitungsbauteils 1 bzw. 1' ermöglicht es zum Beispiel, mit einem Schneidwerkzeug nachträglich die Einbaulänge des Leitungsbauteils 1 bzw. 1' anzupassen oder sogar Öffnungen für Kanalabzweigungen einzuschneiden. Die vorstehend genannten vorteilhaften Eigenschaften machen die erfindungsgemäßen Leitungsbauteile 1 bzw. 1' nicht nur zur Verwendung für Lüftungsrohre oder -kanäle geeignet, sondern ebenfalls zur Herstellung von Abgaskaminen und Abgasschächten.

Die vorstehend beschriebene Erfindung ist selbstverständlich nicht auf die beschriebenen und dargestellten Ausführungsformen beschränkt. An den in der Zeichnung dargestellten Ausführungsformen können zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von dem konkreten Ausführungsbeispielen für den Fachmann naheliegt.

## Patentansprüche

1. Leitungsbauteil, das vor Herstellung einer in sich geschlossenen Mantelfläche plattenförmig ausgebildet ist und eine Schicht (2) aus einem verdichteten und wärmeisolierenden Fasermaterial aufweist,
wobei auf der Innenseite (3) der Schicht (2) aus Fasermaterial eine fluidundurchlässige Dichtschicht (4) aufgebracht ist,
wobei eine Vielzahl von eine Biegung des Leitungsbauteils (1, 1') ermöglichenden Längsauskehlungen (7) in der Schicht (2) aus Fasermaterial ausgeformt ist,
wobei die Längsauskehlungen (7) das Leitungsbauteil (1, 1') in Seitenwandabschnitte (8, 8') unterteilen und jeweilige Eckenabschnitte (9) definieren,
und wobei zur Herstellung einer in sich geschlossenen Mantelfläche das Leitungsbauteil (1, 1') mit seinen Längskanten (17, 18) aneinanderstoßend zu einem gewünschten polygonalen Mantelquerschnitt gebogen ist und die in sich geschlossene Mantelfläche einen durch Zusammenfügen der Längskanten (17, 18) gebildeten Längsfügeabschnitt (21) aufweist,
**dadurch gekennzeichnet,**
**dass** bei in sich geschlossener Mantelfläche die Längskanten (17, 18) Teil eines Seitenwandabschnitts (8, 8') sind und der Längsfügeabschnitt (21) zwischen zwei Eckenabschnitten (9) im Bereich des entsprechenden Seitenwandabschnitts (8, 8') gebildet ist.

2. Leitungsbauteil nach Anspruch 1, **dadurch gekennzeichnet, dass** die Längskanten (17, 18) des Leitungsbauteils (1, 1') jeweils einen stufenförmig ausgebildeten Absatz (22, 23) aufweisen, wobei die jeweiligen stufenförmig ausgebildeten Absätze (22, 23) komplementär zueinander ausgebildet sind.

3. Leitungsbauteil nach Anspruch 2, **dadurch gekennzeichnet, dass** die stufenförmig ausgebildeten Absätze (22, 23) der Längskanten (17, 18) jeweils eine Verbindungsfläche (24, 25) aufweisen, wobei die beiden Verbindungsflächen (24, 25) eben und glattwandig ausgebildet sind oder wobei eine der beiden Verbindungsflächen (24, 25) eine komplementär zu der entsprechend anderen Verbindungsfläche (24, 25) ausgebildete Oberflächenprofilierung (26, 27) aufweist.

4. Leitungsbauteil nach Anspruch 3, **dadurch gekennzeichnet, dass** die jeweilige Oberflächenprofilierung (26, 27) einer entsprechenden Verbindungsfläche (24, 25) ein im Querschnitt rippen- oder sägezahnförmiges Muster aufweist.

5. Leitungsbauteil nach einem der vorhergehenden Ansprüche, **dadurch gekennzeichnet, dass** die Längsauskehlungen (7) auf der Innenseite (3) der Schicht (2) aus Fasermaterial ausgebildet sind und dass die Schicht (2) aus Fasermaterial auf ihrer Außenseite (5) zu den jeweiligen Längsauskehlungen (7) korrespondierend angeordnete und nach außen ballig ausgebildete Längswölbungen (11) aufweist, die Teil der jeweiligen Eckenabschnitte (9) sind.

6. Leitungsbauteil nach Anspruch 5, **dadurch gekennzeichnet, dass** die Breite (12) einer jeweiligen Längsauskehlung (7) kleiner ist als die Breite (13) einer jeweiligen, nach außen ballig ausgebildeten Längswölbung (11).

7. Leitungsbauteil nach Anspruch 5 oder 6, **dadurch gekennzeichnet, dass** die Fasern der Schicht (2) aus Fasermaterial in den Eckenabschnitten (9) gleich stark oder geringer stark verdichtet sind als in den Seitenwandabschnitten (8, 8').

8. Leitungsbauteil nach einem der Ansprüche 5 bis 7,
**dadurch gekennzeichnet, dass** zumindest Bereiche der Seitenwandabschnitte (8, 8') durch starke Verdichtung der Fasern der Schicht (2) aus Fasermaterial formstabil ausgebildet sind.

9. Leitungsbauteil nach einem der Ansprüche 5 bis 8,
**dadurch gekennzeichnet, dass** die Längsauskehlungen (7) und die ballig ausgebildeten Längswölbungen (11) jeweils im Querschnitt ellipsenförmig oder kreisbogenförmig ausgebildet sind.

10. Leitungsbauteil nach Anspruch 9, **dadurch gekennzeichnet, dass** der Radius (14) einer im Querschnitt ellipsenförmig oder kreisbogenförmig ausgebildeten Längswölbung (11) größer ist als der Radius (15) einer im Querschnitt ellipsenförmig oder kreisbogenförmig ausgebildeten Längsauskehlung (7).

11. Leitungsbauteil nach Anspruch 10, **dadurch gekennzeichnet, dass** der Radius (14) einer im Querschnitt ellipsenförmig oder kreisbogenförmig ausgebildeten Längswölbung (11) größer ist als die Breite (16) eines Seitenwandabschnitts (8, 8').

12. Leitungsbauteil nach einem der Ansprüche 5 bis 11,
**dadurch gekennzeichnet, dass** eine elastische Materialschicht (6) an der Außenseite (5) des plattenförmig ausgebildeten Leitungsbauteils (1, 1') vorgesehen ist und auf der Schicht (2) aus Fasermaterial aufgebracht ist.

13. Leitungsbauteil nach einem der Ansprüche 5 bis 12,
**dadurch gekennzeichnet, dass** vor Herstellung einer in sich geschlossenen Mantelfläche des Leitungsbauteils (1, 1') die innenseitige Dichtschicht (4) die Längsauskehlungen (7) derart überdeckt, dass zwischen der Dichtschicht (4) und den jeweiligen Längsauskehlungen (7) jeweilige längsverlaufende Hohlräume (10) gebildet sind, oder die innenseitige Dichtschicht (4) sich der Form der Längsauskehlungen (7) anpasst und an der Innenwand (19) der Längsauskehlungen (7) anliegt.

14. Leitungsbauteil nach einem der vorhergehenden Ansprüche, **dadurch gekennzeichnet, dass** bei geschlossener Mantelfläche die Innenwand (19) einer jeweiligen Längsauskehlung (7) flächig an sich selbst anliegt und der die jeweilige Längsauskehlung (7) überdeckende Abschnitt der fluidundurchlässigen Dichtschicht (4) zwischen der an sich selbst anliegenden Innenwand (19) angeordnet und eingeklemmt ist.

15. Leitungsbauteil nach einem der vorhergehenden Ansprüche, **dadurch gekennzeichnet, dass** zumindest ein Seitenwandabschnitt (8') der Schicht (2) aus Fasermaterial außenseitig querverlaufende, ballig ausgebildete und nach außen gewölbte Biegeabschnitte (28) mit geringer Materialverdichtung aufweist.
